# EUROPÄISCHE PATENTSCHRIFT

(11) **EP 0 394 556 B1**
(45) Veröffentlichungstag und Bekanntmachung des Hinweises auf die Patenterteilung: **16.02.1994**
(21) Anmeldenummer: 89123239.9
(22) Anmeldetag: 15.12.1989
(51) Int. Cl.: F16H 61/26, F16H 63/20

(54) **Schaltvorrichtung für Wechselgetriebe von Kraftfahrzeugen**
Gear change device for stepped gearing of vehicles
Dispositif de changement de rapport pour une boîte de vitesse étagée de véhicule

(30) Priorität: 22.04.1989 DE 3913269
(43) Veröffentlichungstag der Anmeldung: 31.10.1990
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR); Ford Motor Company, Dearborn Michigan 48126 (US)
(72) Erfinder: Schnell, Martin, D-5024 Pulheim (DE); Sabel, Gustav, D-5000 Köln 71 (DE); Winter-Peter, Wolfgang, D-5000 Köln 1 (DE)
(74) Vertreter: Messulam, Alec Moses

(56) Entgegenhaltungen:
- EP-A- 0 025 734
- GB-A- 2 066 909
- US-A- 3 164 030
- US-A- 4 297 910
- US-A- 4 569 247

## Beschreibung

Die Erfindung bezieht sich auf eine Schaltvorrichtung für Wechselgetriebe von Kraftfahrzeugen, der im Oberbegriff des Patentanspruches 1 erläuterten Art.

Aus der US-PS 4,539,859 ist eine Schaltvorrichtung für Wechselgetriebe von Kraftfahrzeugen der im Oberbegriff des Patentanspruches 1 erläuterten Art bekannt.

Die bekannte Schaltvorrichtung weist hierbei eine innere Schaltwelle auf, die einenends in einem Sackloch im Getriebegehäuse und anderenends in einem Lager in einem Schaltungsdeckel gelagert ist und wird über benachbart ihren Lagerungen durch je eine Schraubendruckfeder in ihrer Ausangsschaltgasse gehalten. Der über seine Nabe an der Schaltwelle befestigte Schaltfinger ist mit einem angeformten Rastnockenkamm versehen, der mit einer ortsfesten Rastbolzen/Feder-Anordnung zur Gangarretierung zusammenwirkt. Die auf Schaltgabelwellen verschiebbar angeordneten Schaltgabeln mit angeformten Schaltarmen weisen Eingriffsnuten auf, die in den Bewegungsbereich des Schaltfingers einragen, der mit einem auf der Schaltwelle angeordneten axial bewegbaren Sperrblech derart zusammenwirkt, daß bei Auswahl einer Eingriffsnut eines Schaltarmes durch eine axiale Wählbewegung des Schaltfingers die dem Schaltfinger benachbarten Sperrzungen des Sperrbleches die jeweils übrigen Schaltarme der Schaltgabeln während der folgenden radialen Einrückbewegung des Schaltfingers sperren.

Obwohl bei dieser Schaltvorrichtung die Schaltwelle mit einer Vielzahl von weiteren Schaltungsteilen an einem Schaltungsdeckel vormontierbar ist, ist durch die unterschiedliche Abstützung der Schraubendruckfedern der Einfluß von Fertigungstoleranzen auf die Schaltungsqualität erheblich und durch die Anordnung der Gangarretierung unmittelbar im Getriebegehäuse kann die Montage der Schaltvorrichtung im Getriebegehäuse nicht in einem sondern nur in mehreren aufeinanderfolgenden Schritten erfolgen.

Bei dem bekannten Wechselgetriebe handelt es sich um eine Ausführungsform für den Quereinbau in Verbindung mit einem Frontantrieb eines Kraftfahrzeuges, bei dem die eigentlichen Getriebewellen und die, entsprechende Schaltgabeln aufnehmenden, Schaltgabelwellen quer zur Fahrzeuglängsachse verlaufen und die innere Schaltwelle im wesentlichen horizontal und parallel zur Fahrzeuglängsachse verläuft und die Schaltgabelwellen kreuzt. Die innere Schaltwelle ist in herkömmlicher Weise über eine Gelenke aufweisende äußere Schaltwelle mit dem Schalthebel verbunden.

Aus der DE-PS 24 17 042, insbesondere deren Fig. 1, ist ein Wechselgetriebe in Verbindung mit einem quer im Fahrzeug angeordneten Antriebsaggregat bekannt, bei dem die Getriebewellen auch quer zur Fahrzeuglängsrichtung angeordnet sind und gleichfalls zwei quer zur Fahrzeuglängsachse liegende entsprechende Schaltgabeln aufnehmende Schaltgabelwellen vorgesehen sind, die über eine oben und unten im Getriebegehäuse gelagerte vertikale innere Schaltwelle betätigbar sind, die über herkömmliche außenliegende Umlenkgelenke mit einer im wesentlichen horizontal und parallel zur Fahrzeuglängsachse verlaufenden äußeren Schaltwelle verbunden ist.

Diese bekannte Schaltvorrichtung weist den Nachteil auf, daß die vertikale innere Schaltwelle im Getriebegehäuse unten herausgeführt ist, wodurch sich erhebliche Abdichtungsprobleme ergeben mit deren Lösung sich die genannte Patentschrift befaßt. Die hierfür vorgeschlagene Stopfbuchsenanordnung ist äußerst aufwendig und teuer. Ebenso liegt die Schaltwellenumlenkung außerhalb des Getriebegehäuses, wo diese Gelenke, da Verschmutzungsgefahr vorliegt, aufwendiger und teurer mit Abdichtungen versehen ausgeführt werden müssen.

Die Aufgabe der Erfindung ist es, eine Schaltvorrichtung für Wechselgetriebe von Kraftfahrzeugen, der im Oberbegriff des Patentanspruches 1 erläuterten Art derart zu verbessern, daß die Schaltvorrichtung vollständig mit allen erforderlichen Einzelteilen an der inneren Schaltwelle und dem Schaltungsdeckel vormontierbar ist und daher in einem einzigen Montageschritt, der von Handhabungsautomaten ausgeführt werden kann, montierbar ist und am unteren Lager der Schaltwelle keine Abdichtungsschwierigkeiten auftreten und die Schaltwellenumlenkung in kostengünstiger Weise im Getriebegehäuse angeordnet werden kann.

Gemäß der Erfindung wird diese Aufgabe gelöst, indem eine Schaltvorrichtung für Wechselgetriebe von Kraftfahrzeugen, der im Oberbegriff des Patentanspruches 1 erläuterten Art, die im Kennzeichenteil des Patentanspruches 1 aufgezeigten Merkmale aufweist.

In den weiteren Patentansprüchen sind weitere zweckmäßige Ausführungen der Schaltvorrichtung erläutert.

Dadurch, daß die Lagerung der inneren Schaltwelle unten in einem innerhalb des Getriebegehäuses vorragenden Vorsprung erfolgt und die Schaltwellenumlekung oberhalb desselben angeordnet ist und oberhalb der Lagerung der Schaltwelle im Schaltungsdeckel ein Zylinderraum zur Aufnahme zweier konzentrisch angeordneter Schraubenfedern vorgesehen ist, von denen die eine, innere Feder sich an einem unteren Federteller abstützt und die innere Schaltwelle über einen an ihr befestigten Sprengring nach oben in Anlage einer Schulter der Schaltwelle am unteren Federteller zieht und die andere, äußere Feder zwischen dem Schaltungsdeckel und dem unteren Federteller angeordnet ist und diesen in Anlage gegen eine den Zylinderraum nach unten abschließende Lagerbüchse drückt, die in einer mit dem Schaltungsdeckel verbundenen Blechplatte eingesetzt ist und an der Blechplatte ein Blechwinkel angeschweißt ist, der zwei sich senkrecht zur Achse des Schaltfingers und des Rastnockenkammes erstreckende Wände bildet in der einerseits eine mit einem Schaltstift zusammenarbeitende Schaltkulisse und andererseits eine mit dem Rastnockenkamm zusammenwirkende Rastbolzen/Feder-Anordnung die axialen Bewegungen der inneren Schaltwelle durch einen Teil des Sperrbleches mitmachend jedoch gegen Verdrehen gesichert zusammenwirkt, sind sämtliche toleranzabhängigen Einzelteile der Schaltvorrichtung nur im oberen Bereich der inneren Schaltwelle angeordnet und an dieser bzw. am Schaltungsdeckel vormontierbar und die vormontierte Schaltungsanordnung kann von oben her in einem Schritt montiert werden.

Durch den Rückbezug aller Axialtoleranzen an der Schaltvorrichtung auf die Befestigungsebene des Schaltungsdeckels in Verbindung mit der konzentrischen und winkelrichtigen Zentrierung des Schaltungsdeckels durch die mit der Gehäuseöffnung zusammenwirkende Blechplatte können die Einflüsse von Fertigungstoleranzen auf die Schaltqualität auf einem Minimum gehalten werden.

Die Erfindung wird anhand eines in den beiliegenden Zeichnungen gezeigten Ausführungsbeispieles näher erläutert. Es zeigt:
- Fig. 1: einen parallel zur Fahrzeuglängsmittelebene verlaufenden vertikalen Schnitt in der Ebene der Schaltwelle;

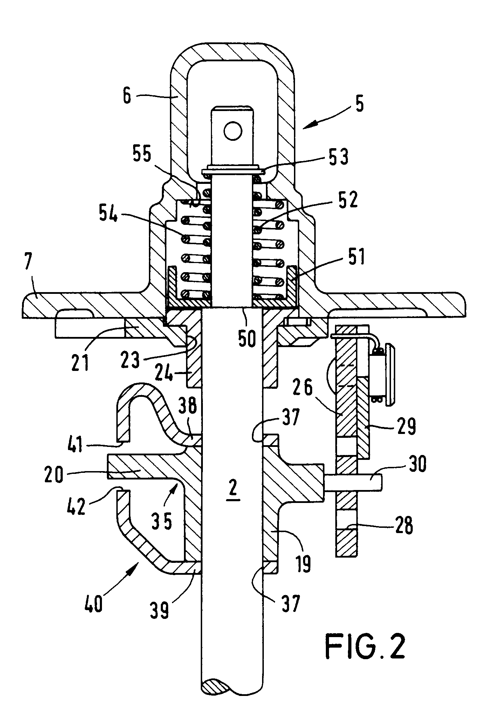

- Fig. 2: eine vergrößerte Darstellung der erfindungsgemäßen Schaltvorrichtung im oberen Bereich der Schaltwelle und des Schaltungsdeckels;

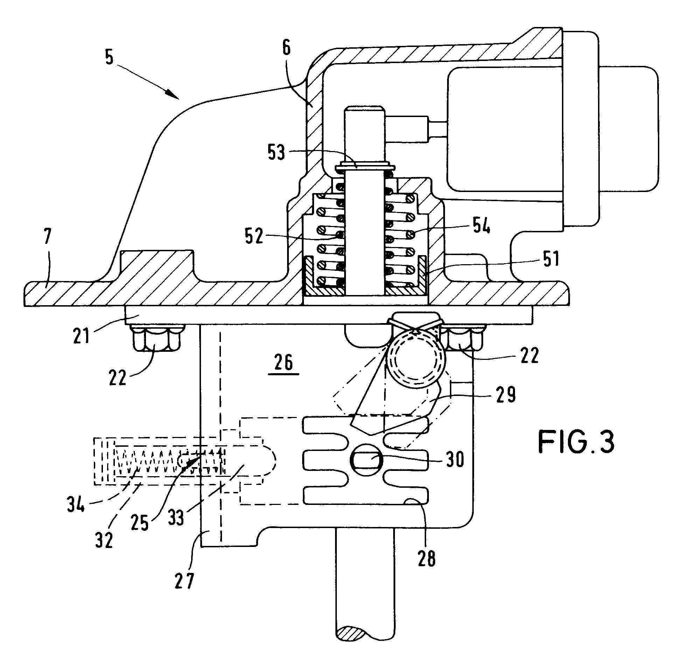

- Fig. 3: eine um 90 Grad gedrehte Ansicht des in Fig. 1 gezeigten Bereiches der Schaltungsvorrichtung;
- Fig. 4: eine Draufsicht auf die Schaltungsvorrichtung in Richtung des Pfeiles IV in Fig. 1 bei als abgenommen dargestellten Schaltungsdeckel und geschnittener Rastbolzen/Feder-Anordnung;
- Fig. 5: eine Unteransicht der Schaltungsanordnung in Richtung des Pfeiles V in Fig. 1 bei entfernt gedachtem Schaltfinger und Sperrblech;
- Fig. 6: eine Seitenansicht gemäß dem Pfeil VI in Fig. 4 und
- Fig. 7 und 8: die Umlenkung der Schaltbetätigung von der vom Handschalthebel kommenden äußeren Schaltwelle auf die im Getriebegehäuse vertikal angeordnete innere Schaltwelle.

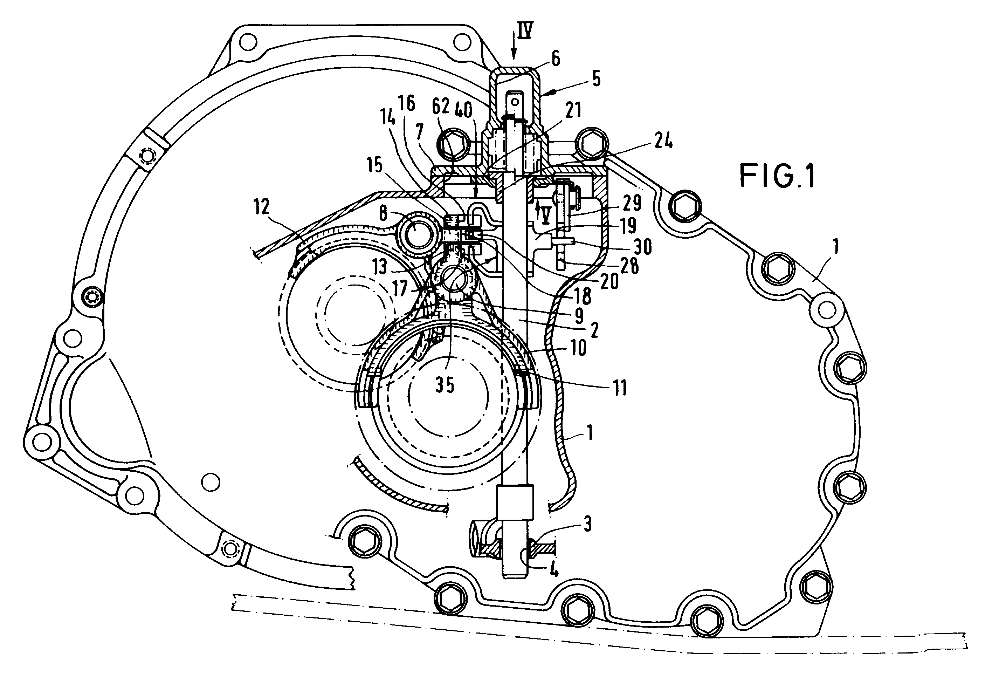

Bei der in Fig. 1 gezeigten Schnittdarstellung des Wechselgetriebes eines Kraftfahrzeuges ist das Getriebegehäuse 1 im wesentlichen nur in Form seiner Flanschumrisse angedeutet und lediglich der Bereich im Schnitt dargestellt, der unmittelbar in der Ebene der vertikalen inneren Schaltwelle 2 liegt. Die vertikale Schaltwelle 2 ist hierbei an ihrem unteren Ende in einem am Getriebegehäuse 1 ausgebildeten Gehäusevorsprung 3 in einer Durchgangsbohrung 4 gelagert und ist in ihrem oberen Bereich in einem Schaltungsdeckel 5 in einer Lagerbüchse 24 geführt.

Der Schaltungsdeckel 5 besteht im wesentlichen aus einem zylindrischen Schaltungsgehäuse 6 und einem Flanschteil 7.

Quer zur Schaltwelle 2 sind die in gestrichelten Linien nur angedeuteten Getriebewellen und die parallel hierzu verlaufenden Schaltgabelwellen 8 und 9 mit darauf verschiebbar angeordneten Schaltgabeln 10, 11 und 12 angeordnet. An den Schaltgabeln 10, 11 und 12 sind Schaltarme 13, 14 und 15 angeformt, die je eine Eingriffsnut 16, 17 und 18 aufweisen, die in den Bewegungsbereich des mit seiner Nabe 19 auf der Schaltwelle 2 befestigten Schaltfingers 20 einragen.

Mit der unteren Seite des Flanschteiles 7 ist eine Blechplatte 21 mittels Schrauben 22 fest verbunden, in der in einer Bohrung 23 die Lagerbüchse 24 eingepreßt ist. Die Lagerbuchse 24 zentriert über ihren Außenumfang die axiale Ausrichtung der Blechplatte 21 über deren Bohrung 23 und zentriert gleichzeitig über ihren Flansch die axiale Ausrichtung des Schaltungsdeckels 5 zur inneren Schaltwelle 2 über dessen zylindrischer Ausnehmung. An der Blechplatte 21 ist weiterhin ein Blechwinkel 25 eingesteckt und verschweißt oder buckelgeschweißt, der zwei Schenkel 26 und 27 aufweist. Im einen Schenkel 26 ist eine Schaltkulisse 28 in Verbindung mit einer Rückwärtsgangsperrklinke 29 angeordnet, die mit einem an der Schaltfingernabe 19 angeordneten Schaltstift 30 zusammenwirken.

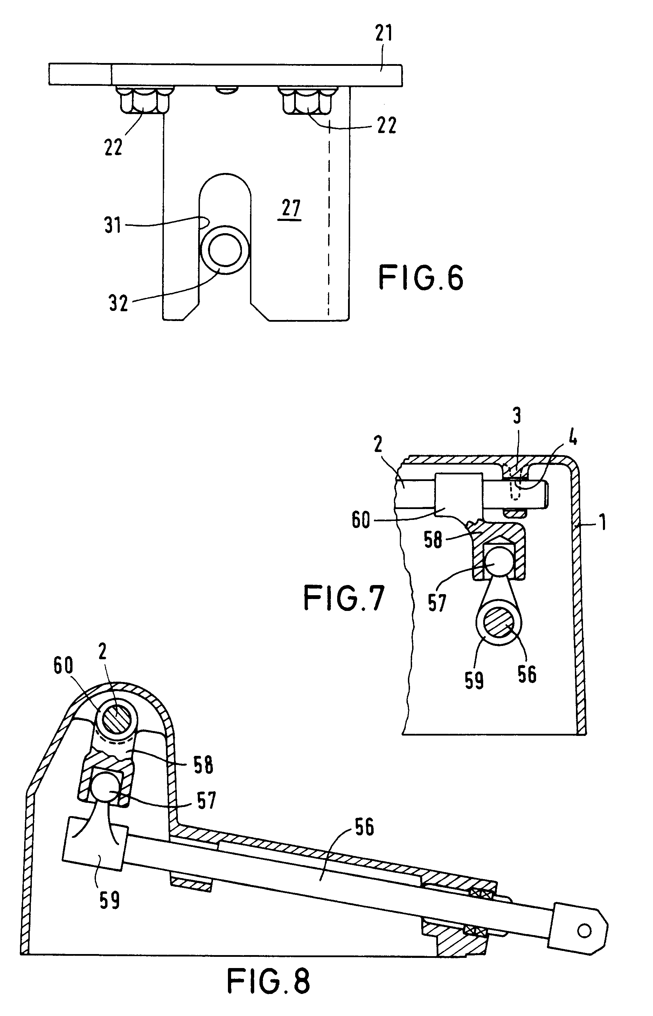

Im anderen Schenkel 27 ist ein Langloch 31, siehe Fig. 6, ausgebildet das eine Haltehülse 32 für eine Rastbolzen/Feder-Anordnung 33/34 axial führt und gegen Verdrehung sichert.

An der inneren Schaltwelle 2 ist ein Drei-Funktions-Schaltelement 35 axial und drehfest festgelegt. Das Schaltelement 35 besteht im wesentlichen aus einer Schaltfingernabe 19, einem Schaltfinger 20, einem Schaltstift 30 und einem Rastnockenkamm 36.

Unmittelbar axial benachbart der Schaltfingernabe 19 sind über Bohrungen 37 axiale Endwände 38 und 39 eines Sperrbleches 40 angeordnet, das auf der inneren Schaltwelle 2 den axialen Wählbewegungen der Schaltfingernabe 19 folgen kann und mit benachbart dem Schaltfinger 20 angeordneten Sperrzungen 41 und 42 versehen ist. Das Sperrblech 40 weist in einem seine beiden Endteilen 38 und 39 verbindenden Stegteil 43 eine Bohrung 44 auf, in der ein Absatz 45 der Haltehülse 32 der Rastbolzen/Feder-Anordnung 33/34 ausgerichtet aufgenommen wird und durch Verschweißen mit dem Stegteil 43 befestigt wird.

Eine radiale Einrückbewegung der inneren Schaltwelle 2 zum Einrücken der Gänge kann vom Sperrblech 40 nicht mitgemacht werden, da dieses über die Haltehülse 32 im Schenkel 27 des Blechwinkels 25 verhindert wird. Eine Axialbewegung der Schaltwelle 2 kann das Sperrblech 40 jedoch ungehindert mitmachen, da sich die Haltehülse 32 im Langloch 31 im Schenkel 27 des Blechwinkels 25 bewegen kann.

Der Rastnockenkamm 36 weist hierbei in an sich bekannter Weise Ausnehmungen 46, 47 und 48 auf, die mit dem Kopf des Rastbolzens 33 federbelastet zusammenwirken um die eingelegten Gangstufen zu arretieren.

Da beim Wählen der Schaltgasse die gesamte Schaltfinger-Anordnung mitbewegt wird, kann der Rastnockenkamm 36 schmal gehalten werden.

Damit die Schaltung bis hin zum Schalthebel in der gewünschten Ausgangsschaltgasse, der Schaltgasse für den 3. und 4. Gang gehalten wird, weist die innere Schaltwelle 2 in ihrem oberen in das zylindrische Schaltungsgehäuse 6 einragenden Teil eine Schulter 50 auf, an der ein unterer Federteller 51 zur Anlage kommt. Eine innere Schraubendruckfeder 52 stützt sich mit ihrem unteren Ende gleichfalls an dem unteren Federteller 51 ab und zieht die Schaltwelle 2 mit ihrem oberen Ende, das über einen Sprengring 53 an der Schaltwelle 2 festgelegt ist nach oben, so daß die Schulter 50 am unteren Federteller 51 anliegt. Eine äußere Schraubendruckfeder 54 stützt sich mit ihrem oberen Ende an einem Absatz 55 im Schaltungsgehäuse 6 ab und drückt mit ihrem unteren Ende den unteren Federteller 51 nach unten, wodurch dieser in Anlage gegen die Lagerbüchse 24 kommt, die in der Blechplatte 21 eingepreßt ist.

Das Anliegen des unteren Federtellers 51 an der Lagerbüchse 24 und das entsprechende Anliegen der Schulter 50 der Schaltwelle 2 am unteren Federteller 51 bestimmt somit die Lage der Schaltwelle 2 in ihrer Ausgangsschaltgasse, die der Schaltebene des 3. und 4. Ganges entspricht.

Beim Wählen des 1. und 2. Ganges wird die innere Schaltwelle 2 nach unten gedrückt und belastet hierdurch die innere Feder 52, die äußere Feder 54 wird nicht belastet.

Beim Wählen des 5. Ganges oder des Rückwärtsganges wird die innere Schaltwelle 2 angehoben und nimmt hierdurch den unteren Federteller 51 mit, wodurch die äußere Feder 54 gespannt wird, wohingegen die innere Feder 52 nicht belastet wird. Dadurch kann für den Wählvorgang in die Schaltgasse des 5. Ganges und des Rückwärtsganges durch die Wahl der Federkraft eine größere Wählkraft vorgegeben werden.

Die Übertragung der Schaltbewegung vom Handschalthebel erfolgt über eine horizontale Eingangsschaltwelle 56 und einer Kugelkopf/Kugelpfanne-Umlenkeinrichtung 57/58, wie sie aus den Figuren 7 und 8 ersichtlich ist von einer äußeren Schaltwelle (nicht gezeigt). Die Kugelkopf/Kugelpfanne-Umlenkeinrichtung 57/58 ist jeweils über Nabenteile 59 und 60 an der Eingangsschaltwelle 56 bzw. der inneren Schaltwelle 2 befestigt.

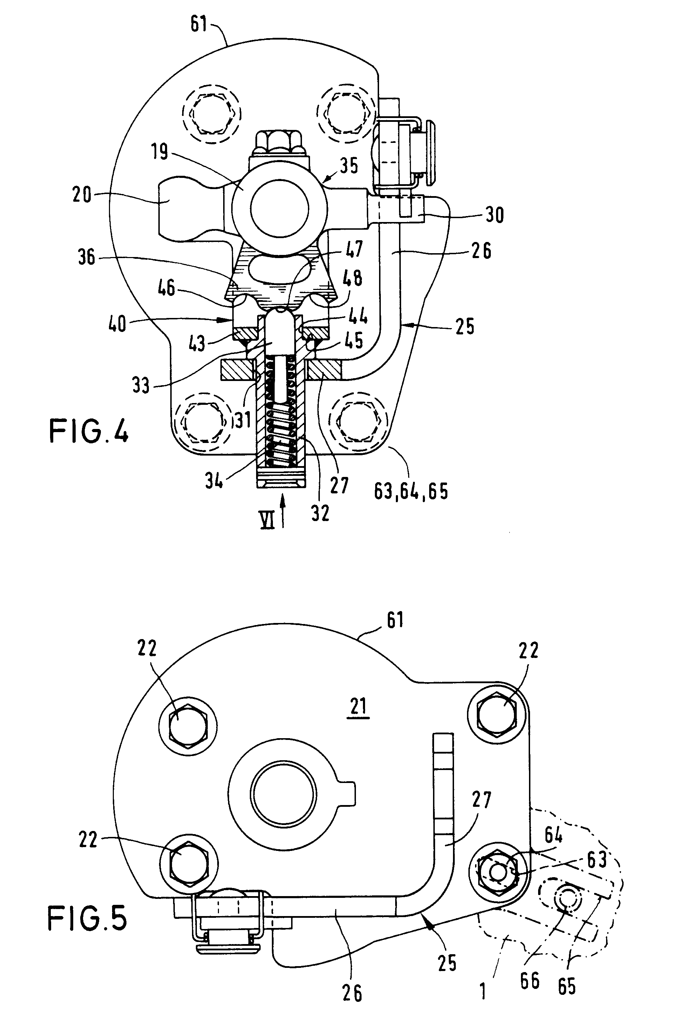

Die an dem Flanschteil 7 des Schaltungsdeckels 5 befestigte Blechplatte 21 weist an ihrem Außenumfang 61, siehe Fig. 5, einen sich über fast 180 Grad erstreckende Kreiskontur auf, mittels der sie in der kreisförmigen Öffnung 62 im Getriebegehäuse 1 zentriert wird, wobei die Winkellage mittels einer Paßbohrung/Paßschraube-Anordnung 63/64 an einer der Befestigungsschrauben 65 festgelegt wird.

Um eine noch genauere Zentrierung zu erreichen, kann lediglich die Blechplatte 21 über die Paßbohrung/Paßschraube-Anordnung 63/64 zum Schaltungsdeckel 5 hin zentriert werden, während der Schaltungsdeckel 5 über einen Paßschlitz 65 an einem Vorsprung über eine Paßbuchse 66 in einer Bohrung 67 am Getriebegehäuse 1 separat zentriert wird (siehe Strich-Punkt-Linie in Fig. 5).

## Patentansprüche

1. Schaltvorrichtung für Wechselgetriebe von Kraftfahrzeugen,
- mit einer zur Vorwahl der Schaltgassen axial verschiebbaren und zum Einlegen der Gänge drehbaren inneren Schaltwelle (2), die in einem Lager im Getriebegehäuse (1) und in einem Lager in einem Schaltungsdeckel (5) geführtund zwei Schraubendruckfedern in ihrer Ausgangsschaltgasse gehalten ist,
- mit einem an der inneren Schaltwelle (2) befestigten Schaltfinger (20) und einem mit ihm einstückigen Rastnockenkamm (36) der mit einer im wesentlichen ortsfesten Rastbolzen/Feder-Anordnung (33/34) zur Gangarretierung zusammenwirkt,
- mit Schaltgabelwellen (8 und 9) und darauf verschiebbar angeordneten Schaltgabeln (10, 11 und 12), die an angeformten Schaltarmen (13, 14 und 15) Eingriffsnuten (16, 17 und 18) aufweisen, die in den Bewegungsbereich des Schaltfingers (20) einragen,
- mit einem vom Schaltfinger (20) axial mitbewegbaren, auf der Schaltwelle (2) angeordneten Sperrblech (40), das über eine Bolzen/Schlitz-Verbindung (31/32) gegen Verdrehen festgehalten ist,
- wobei bei Auswahl einer Eingriffsnut (18) eines Schaltarmes (15) durch eine Axialbewegung des Schaltfingers (20) am Sperrblech (40) ausgebildet, dem Schaltfinger (20) benachbarte Sperrzungen (41 und 42) in die Eingriffsnuten (16 und 17) der anderen Schaltarme (13 und 14) eingreifen und diese und ihre Schaltgabeln (10 und 11) während der folgenden Drehbewegung des Schaltfingers (20) sperren,
**dadurch gekennzeichnet**, daß
- die vertikale innere Schaltwelle (2) an ihrem unteren Ende in einem am Getriebegehäuses (1) ausgebildeten Gehäusevorsprung (3) in einer Durchgangsbohrung (4) gelagert ist,
- in dem die Schaltwelle (2) an ihrem oberen Ende führenden Schaltungsdeckel (5) ein Zylinderraum (6) zur Aufnahme zweier konzentrisch angeordneter Schraubenfedern (52 und 54) vor- gesehen ist,
- deren eine, innere Feder (52) sich an einem unteren Federteller (51) abstützt und die Schaltwelle (2) (2) über einen an ihr befestigten Sprengring (53) nach oben in Anlage einer Schulter (50) der Schaltwelle (2) am unteren Federteller (51) zieht und
- deren andere, äußere Feder (54) zwischen dem Schaltungsdeckel (5) und dem unteren Federteller (51) anangeordnet ist und diesen in Anlage gegen eine den Zylinderraum (6) nach unten abschließende Lagerbüchse (24) drückt, die in einer Blechplatte (21) eingesetzt ist,
- an der Blechplatte (21) einen Blechwinkel (25) angeschweißt ist, der zwei sich senkrecht zur Achse des Schaltfingers (20) und des Rastnockenkamms (36) erstreckende Schenkel (26 und 27) bildet,
- an der Nabe (19) des Schaltfingers (20) ein sich diametral zu diesem erstreckender Schaltstift (30) angeordnet ist, der mit einer im Schenkel (26) des Blechwinkels (25) eingearbeitete Schaltkulisse (28) führend zusammenwirkt,
- am Sperrblech (40) ein die beiden axialen Endwände (38 und 39) verbindender Stegteil (43) vorgesehen ist an dem in einer Bohrung (44) die Haltehülse (32) der Rastbolzen/Feder-Anordnung (33/34) befestigt ist und in einem Langloch (31) im Schenkel (37) des Blechwinkels (25) axial beweglich und gegen Verdrehen gesichert bewegbar ist.

2. Schaltvorrichtung nach Anspruch 1,
**dadurch gekennzeichnet**, daß
- der Schaltungsdeckel (5) über die am Flanschteil (7) befestigte Blechplatte (21) mittels eines sich über mehr als 180 Grad erstreckenden Kreisumfang (61) aufweist, über den der Schaltungsdeckel (5) in einer entsprechenden Kreisöffnung (62) im Getriebegehäuse (1) axial zentriert angeordnet ist, wobei die Winkellage des Schaltungsdeckels (5) zum Getriebegehäuse (1) als auch die radiale Winkellage der Blechplatte (21) zum Schaltdeckel (5) über eine Paßlangloch/Paßschraube-Anordnung (63/64) an einer der Befestigungsschrauben (22) bestimmt wird.

3. Schaltvorrichtung nach Anspruch 1,
**dadurch gekennzeichnet**, daß
- die am Flanschteil (7) des Schaltungsdeckels (5) befestigte Blechplatte (21) einen sich über mehr als 180 Grad erstreckenden Kreisumfang (61) aufweist, über den der Schaltungsdeckel (5) in einer entsprechenden Kreisöffnung (62) im Getriebegehäuse (1) axial zentriert angeordnet ist, wobei die radiale Winkellage der Blechplatte (21) zum Schaltungsdeckel (5) über eine Paßlangloch/Paßschraube-Anordnung (63/64) und die radiale Winkellage des Schaltungsdeckels (5) zum Getriebegehäuse (1) über eine Paßschlitz/Paßbuchse-Anorndung (65/66 Strich-Punkt-Darstellung) bestimmt wird.

## Claims

1. A gear-shift device for motor vehicle transmissions,
- with an internal gear-shift shaft (2) which is axially movable for pre-selecting the shift lanes, is rotatable for engagement of the gear speeds, is guided in a bearing in the transmission casing (1) and in a bearing in a gear-shift cover (5) and is held in its starting gear-shift lane two helical compression springs (sic),
- with a gear-shift finger (20) fixed on the internal gear-shift shaft (2) and a comb-like cam (36) integral therewith which co-operates with a substantially stationary catch stud/spring arrangement (33/34) for arresting the gear speeds,
- with gear-shift fork rods (8 and 9) and gear-shift forks (10, 11 and 12) which are arranged movably thereon and, on moulded gear-shift arms (13, 14 and 15), have engagement grooves (16, 17 and 18) which penetrate into the region of movement of the gear-shift finger (20),
- with a locking plate (40) which can be moved axially by the gear-shift finger (20), is arranged on the gear-shift shaft (2) and is secured against rotation via a bolt/slot connection (31/32),
- wherein, when one engagement groove (18) of a gear-shift arm (15) is selected by an axial movement of the gear-shift finger (20), locking tongues (41 and 42) formed on the locking plate (40) and adjacent to the gear-shift finger (20) engage in the engagement grooves (16 and 17) of the other gear-shift arms (13 and 14) and lock them and their gear-shift forks (10 and 11) during the subsequent rotational movement of the gear-shift finger (20),
characterised in that
- the vertical internal gear-shift shaft (2) is mounted, at its lower end, in a through-passage (4), in a casing projection (3) formed on the transmission casing (1),
- a cylindrical chamber (6) for receiving two concentrically arranged helical springs (52 and 54) is provided in the gear-shift cover (5) guiding the gear-shift shaft (2) at its upper end,
- the inner spring (52) of which rests on a lower spring plate and pulls the gear-shift shaft (2) (2) (sic) upward via a snap ring (53) fixed thereon so that a shoulder (50) of the gear-shift shaft (2) contacts the lower spring plate (51) and
- the other, outer spring (54) of which is arranged between the gear-shift cover (5) and the lower spring plate (51) and presses the lower spring plate (51) into contact with a bearing bush (24) which seals the cylindrical chamber (6) at the bottom and is inserted in a sheet metal plate (21),
- a sheet metal angle piece (25) forming two arms (26 and 27) extending perpendicularly to the axis of the gear-shift finger (20) and of the comb-like cam (36), is welded on the sheet metal plate (21),
- a gear-shift pin (30) extending diametrically to the gear-shift finger (20) is arranged on the hub (19) of the gear-shift finger (20) and co-operates in guiding fashion with a gear-shift gate (28) worked in the arm (26) of the sheet metal angle piece (25),
- a web part (43) which connects the two axial end walls (38 and 39) is provided on the sheet metal plate (40), on which web part (43) the holding sleeve (32) of the catch stud/spring arrangement (33/34) is fixed in an opening (44) and is axially movable in a slot (31) in the arm (37) of the sheet metal angle piece (25) and is movable but secured against rotation.

2. A gear-shift device according to claim 1,
characterised in that
- the gear-shift cover (5) has over the sheet metal plate (21) fixed on the flange part (7) by means of a circular periphery (61) extending over more than 180° (sic), by means of which the gear-shift cover (5) is axially centred in a corresponding circular aperture (62) in the transmission casing (1), the angular position of the gear-shift cover (5) relative to the transmission casing (1) as well as the radial angular position of the sheet metal plate (21) relative to the gear-shift cover (5) being determined via a locating slot/locating bolt arrangement (63/64) on one of the fixing bolts (22).

3. A gear-shift device according to claim 1,
characterised in that
- the sheet metal plate (21) fixed on the flange part (7) of the gear-shift cover (5) has a circular periphery (61) extending over more than 180°, by means of which the gear-shift cover (5) is axially centred in a corresponding circular aperture (62) in the transmission casing (1), the radial angular position of the sheet metal plate (21) relative to the gear-shift cover (5) being defined by a locating slot/locating bolt arrangement (63/64) and the radial angular position of the gear-shift cover (5) relative to the transmission casing (1) being determined via a locating slot/locating bush arrangement (65/66 dot dash illustration).

## Revendications

1. Mécanisme de commande pour boîtes de vitesses de véhicules à moteur comprenant :
- un arbre intérieur de changement de vitesse (2) pouvant tourner pour engager les vitesses et pouvant être déplacé axialement pour présélectionner les rainures d'embrayage, qui est guidé dans un coussinet du carter de la boîte de vitesses (1) et dans un coussinet d'un couvercle d'embrayage (5) et qui est maintenu dans sa rainure d'embrayage finale par deux ressorts cylindriques à pression,
- un doigt de commande (20) fixé à l'intérieur de l'arbre de changement de vitesse (2) et une came d'arrêt (36) réalisée d'un seul tenant avec le doigt de commande, qui coopère avec une disposition boulon d'arrêt/ressort (33/34) pour enclencher une vitesse,
- des arbres de fourche d'embrayage (8 et 9) et des fourches d'embrayage (10, 11 et 12) disposées de manière mobile sur ces derniers, qui présentent des bras de manoeuvre (13, 14 et 15) munis de cannelures d'engrènement (16, 17 et 18), lesquelles font saillie dans la zone balayée par le doigt de commande (20),
- une plaque d'arrêt (40) disposée sur l'arbre de changement de vitesse (2) et pouvant être déplacée axialement par le doigt de commande (20), qui est maintenue par un assemblage à boulon et fente (31/32) pour éviter qu'elle ne se torde,
- sachant qu'en sélectionnant une cannelure d'engrènement (18) d'un bras de manoeuvre (15) en déplaçant axialement le doigt de commande (20), des languettes d'arrêt (41 et 42) réalisées sur la plaque d'arrêt (40) et adjacentes au doigt de commande (20) s'engrènent dans les cannelures d'engrènement (16 et 17) des autres bras de manoeuvre (13 et 14) et bloquent ces derniers ainsi que leurs fourches d'embrayage (10 et 11) pendant le mouvement de rotation du doigt de commande (20) qui fait suite,
caractérisé en ce que l'arbre intérieur et vertical de changement de vitesse (2) est monté à son extrémité inférieure dans un perçage de passage (4) d'une saillie (3) du carter réalisée sur le carter de la boîte de vitesses (1),
- en ce qu'un espace cylindrique (6) destiné à recevoir deux ressorts cylindriques (52 et 54) disposés de manière concentrique est prévu dans le couvercle d'embrayage (5) guidant l'arbre de changement de vitesse (2) à son extrémité supérieure,
- en ce que l'un (52) de ces ressorts, celui situé à l'intérieur, prend appui sur une cuvette de ressort (51) inférieure, et tire l'arbre de changement de vitesse (2) vers le haut par le biais d'un circlip (53) qui y est fixé, par application d'un épaulement (50) de l'arbre de changement de vitesse (2) sur la cuvette de ressort (51) inférieure,
- en ce que l'autre ressort (54), celui situé à l'extérieur, est disposé entre le couvercle d'embrayage (5) et la cuvette de ressort (51) inférieure et appuie cette dernière contre un coussinet (24) fermant le bas de l'espace cylindrique (6), qui est logé dans une plaque de tôle (21),
- en ce qu'une cornière (25) formant deux branches (26 et 27) qui s'étendent perpendiculairement à l'axe du doigt de commande (20) et de la came d'arrêt (36) est soudée à la plaque de tôle (21),
- en ce qu'une tige de manoeuvre (30) qui coopère avec une coulisse (28) intégrée dans la branche (26) de la cornière (25) de manière à la guider est disposée sur le moyeu (19) du doigt de commande (20) et s'étend à l'opposé de ce dernier,
- et en ce qu'est prévue sur la plaque d'arrêt (40) une âme (43) reliant les deux parois d'extrémité (38 et 39), sur laquelle la douille (32) de la disposition boulon d'arrêt/ressort (33/34) est fixée dans un perçage (44) et peut être déplacée axialement dans un trou oblong (31) dans la branche (37) de la cornière (25), tout en étant protégée contre la torsion.

2. Mécanisme de commande selon la revendication 1, caractérisé en ce que la plaque de tôle (21) fixée au flasque (7) du couvercle d'embrayage (5) présente un pourtour circulaire (61) s'étendant sur plus de 180 degrés, à l'aide duquel le couvercle d'embrayage (5) est disposé de manière axialement centrée dans un orifice circulaire (62) correspondant du carter de la boîte de vitesses (1), l'angle du couvercle d'embrayage (5) par rapport au carter de la boîte de vitesses (1) et l'angle radial de la plaque en tôle (21) par rapport au couvercle d'embrayage (5) étant déterminés par l'intermédiaire d'une disposition trou oblong d'ajustement/vis de précision (63/64) sur une des vis de fixation (22).

3. Mécanisme de commande selon la revendication 1, caractérisé en ce que la plaque de tôle (21) fixée au flasque (7) du couvercle d'embrayage (5) présente un pourtour circulaire (61) s'étendant sur plus de 180 degrés, par le biais duquel le couvercle d'embrayage (5) est disposé de manière axialement centrée dans un orifice circulaire (62) du carter de la boîte de vitesses (1), l'angle radial de la plaque de tôle (21) par rapport au couvercle d'embrayage (5) étant déterminé par une disposition trou oblong d'ajustement/vis de précision (63/64) et l'angle radial du couvercle d'embrayage (5) par rapport an carter de la boîte de vitesses (1) par une disposition fente d'ajustement/coussinet d'ajustement (65/66 représentée en pointillés).
